# EUROPÄISCHE PATENTSCHRIFT

(11) **EP 1 050 367 B1**
(45) Veröffentlichungstag und Bekanntmachung des Hinweises auf die Patenterteilung: **14.02.2007**
(21) Anmeldenummer: 00103732.4
(22) Anmeldetag: 22.02.2000
(51) Int. Cl.: B23Q 11/08, B24B 55/00, F16C 29/08

(54) **Dichtungsanordnung für ein lastabtragendes Lager, insbesondere für Koordinatenmessvorrichtungen**
Seal arrangement for charge carrying bearing, in particular for coordinate measuring devices
Dispositif de joint d'étanchéité pour un support de charge, en particulier pour des dispositifs de mesure de coordonnées

(30) Priorität: 05.05.1999 DE 19920740
(43) Veröffentlichungstag der Anmeldung: 08.11.2000
(73) Patentinhaber: Carl Zeiss Industrielle Messtechnik GmbH, 73447 Oberkochen (DE)
(72) Erfinder: Jacobs, Klaus, 89551 Königsbronn-Ochsenburg (DE); Piwek, Volker, 73430 Aalen (DE); Woletz, Franz, 73457 Essingen (DE); Bernhardt, Ralf, 73432 Aalen (DE)
(74) Vertreter: Geyer, Fehners & Partner

(56) Entgegenhaltungen:
- DE-A- 3 203 738
- DE-U- 8 909 120
- US-A- 4 802 774
- US-A- 5 171 002
- PATENT ABSTRACTS OF JAPAN vol. 1996, no. 10, 31. Oktober 1996 (1996-10-31) -& JP 08 141876 A (T S II:KK), 4. Juni 1996 (1996-06-04)
- PATENT ABSTRACTS OF JAPAN vol. 1995, no. 09, 31. Oktober 1995 (1995-10-31) -& JP 07 158639 A (IZUMI KIKAI SEISAKUSHO:KK), 20. Juni 1995 (1995-06-20)
- PATENT ABSTRACTS OF JAPAN vol. 1996, no. 08, 30. August 1996 (1996-08-30) -& JP 08 090385 A (TORAY IND INC), 9. April 1996 (1996-04-09)

## Beschreibung

Die Erfindung bezieht sich auf eine Dichtungsanordnung für ein lastabtragendes Lager, das sich auf einer auf einem Tragkörper vorgesehenen Führungsbahn abstützt und längs derselben beweglich angeordnet ist, insbesondere für Koordinatenmeßvorrichtungen.

Lastabtragende Lager, die sich auf Führungsbahnen, welche auf Tragkörpern angebracht sind, abstützen und längs derselben beweglich sind, werden auf vielen technischen Gebieten eingesetzt, so z.B. zur Abstützung beweglicher Maschinentische bei Werkzeugmaschinen oder als Stützlager für Brücken oder Portale bei Koordinatenmeßvorrichtungen.

Die einfachste Ausführung solcher Lager besteht darin, daß sich das betreffende Lager nur auf der zugeordneten Führungsbahn beweglich abstützt, ohne daß irgendwelche besonderen Dichtungseinrichtungen vorgesehen sind, um das Eindringen von Verschmutzungen, von Schwebeteilchen, Aerosolen, Feuchtigkeit o.ä in die Lagerfläche zu verhindern. Solche Anordnungen sind dann möglich, wenn nur relativ geringe Anforderungen an die Verschmutzungsunempfindlichkeit der Führungselemente gestellt werden oder wenn die betreffende Vorrichtung in einem geeigneten Reinraum arbeitet.

Zunehmend werden solche Geräte jedoch in Fertigungsumgebung eingesetzt, d.h. die Maschinen stehen nicht mehr in geschlossenen, klimatisierten und vor einem Zutritt von Fertigungsmedien geschützten, sondern in zur Fertigung eingesetzten Räumen und Hallen, wodurch die Gefahr besteht, daß alle in solchen Fertigungshallen vorhandenen Verschmutzungen u.ä. zu einer Beeinträchtigung der Führungsbahnen und damit der Qualität der Lagerflächen führen. Dies ist insbesondere dann unerwünscht, wenn es sich bei den jeweiligen Maschinen um hochpräzise Meßvorrichtungen handelt bei denen solche Einflüsse ausgeschaltet werden müssen.

So wurde bei Koordinatenmeßvorrichtungen zum Abdichten solcher Lager schon eine Dichtungsanordnung vorgesehen, bei der die Führungsbahn und das sich auf dieser abstützende Lager von einem kastenförmig ausgebildeten Abdeckblech überdeckt sind, auf dessen der Führungsbahn gegenüberliegenden Seite ein zentraler Längsschlitz ausgebildet ist, durch den ein Verbindungselement, welches das Lager mit einer außerhalb des Abdeckbleches abzustützenden Struktur verbindet hindurchgeführt ist. Dieses Verbindungselement weist innerhalb des vom Abdeckblech umschlossenen Raumes nahe am Längsschlitz einen breiten, sich beidseits über die Seitenränder des Längsschlitzes hinaus erstreckenden Führungskörper auf, der (in Längsrichtung des Längsschlitzes gesehen) von einer Durchgangsöffnung durchsetzt wird. Durch diese Durchgangsöffnung läuft ein ihr formmäßig angepaßtes Abdeckband hindurch, das innerhalb des Abdeckbleches über dessen gesamte Länge hinweg vorliegt und dazu dient, den Längsschlitz auf der Innenseite des Abdeckbleches zu überdecken. Dieses Abdeckband, das eine Breite aufweist mit der es den Längsschlitz auch seitlich überragt ist an seinen beiden Enden in geeigneter Weise befestigt. Da das Abdeckband durch die Durchlaßöffnung des Führungskörpers hindurchläuft kann das Lager mit dem angekoppelten Verbindungselement und der mit diesem verbundenen, abzustützenden Struktur längs des Bandes bewegt werden, so daß die für das Lager erforderliche Längsbewegung gewährleistet ist das Abdeckband aber dennoch jederzeit in den Bereichen außerhalb des Lagers den offenen Längsschlitz gegenüber der Innenseite des Abdeckbleches verdeckt. Da wegen der Gesamtkonstruktion das Abdeckband in einem wenn auch kleinen Abstand vom Längsschlitz des Abdeckbleches angeordnet ist kann hierdurch zwar eine gewisse Abdichtung gegen das Eindringen von Verschmutzungen, Staub u.ä. geschaffen werden, die vorhandenen Spalte sind aber relativ groß, so daß eine besonders gute Dichtwirkung gegen Verschmutzung der Führungselemente oder das Eindringen von Schwebeteilchen noch nicht sichergestellt ist.

Des weiteren ist auch schon die konstruktive Lösung bekannt daß an jeder Seite des Lagers (in dessen Bewegungsrichtung) ein Faltenbalg angeschlossen ist der den auf dieser Lagerseite liegenden, jeweils nicht vom Lager bedeckten Teil der Führungsbahn als Dichtungsschutz überdeckt. Der konstruktive Aufwand der hier erforderlichen Kapselung mittels Faltenbalgen über die ganze Länge und Breite der Führungsfläche hinweg ist jedoch erheblich und die für die Verschiebung der Faltenbalge aufzubringenden Kräfte sind der gewünschten möglichst kräftefreien Längsverstellung des eingesetzten Lagers nicht förderlich.

Aus der JP-A-08 141876 ist eine Dichtungsanordnung der eingangs genannten Art bekannt, bei der das Lager mit einer Lagerabdeckung verbunden ist, die den Tragkörper überspannt und auf einer Seite desselben einen auf dessen Seite hin abgewinkelten Seitenabschnitt mit einer im Querschnitt U-förmigen Ausbildung aufweist. Dabei ist an dieser Seite des Tragkörpers eine über die ganze Länge der Führungsbahn hinweg verlaufende, im Querschnitt ebenfalls U-förmige Formausnehmung angebracht, in die die U-förmige Ausbildung des Seitenabschnitts zur Ausbildung einer Labyrinthdichtung mit jener hineinragt. Dabei liegt das geschlossene Ende des Seitenabschnitts innerhalb der entsprechenden Formausnehmung. Die Führungsbahn wird über ihre ganze Länge hinweg von einer Führungsbahnabdeckung überspannt, welche die Lagerabdeckung sowie deren Seitenabschnitt überdeckt und im Bereich des Lagers mit einem Seitenschenkel in die Ausnehmung des U-förmigen Querschnitts des Seitenabschnitts der Lagerabdeckung hineinragt. Der seitlich außen liegende Schenkel des U-förmigen Querschnitts des Seitenabschnitts der Lagerabdeckung ist über das Niveau der Führungsbahnabdeckung hinaus verlängert und dort mit einer vom Lager abzustützenden Struktur verbunden. Bei dieser bekannten Anordnung sind parallel zueinander zwei auf einem Tragkörper vorgesehene Führungsbahnen angebracht, wobei sich die Lagerabdeckung ebenso wie die Führungsbahnabdeckung über die gesamt Breite der Vorrichtung erstrecken und beide Führungsbahnen und Tragkörper überdecken. An der Außenseite jedes der beiden Tragkörper bildet die Lagerabdeckung einen auf dessen Seite hin abgewinkelten Seitenabschnitt mit im Querschnitt U-förmiger Ausbildung aus, der dort in eine jeweils ebenfalls vorgesehene, auf der betreffenden Seite des Tragkörpers angebrachte U-förmige Formausnehmung zur Ausbildung einer Labyrinthdichtung hineinragt. Die Lastabgabe erfolgt auf jeder Seite der abzustützenden Struktur jeweils nur außenseitig und wird über ein Abtragelement auch nur einseitig auf das zugeordnete Lager übertragen. Die dabei auftretende, rein einseitige Kraftübertrag von der Struktur über das Lager auf den jeweiligen Tragkörper führt zur Erzeugung eines Kippmomentes an diesem, was die Kraftabtragung und damit auch die Präzision der Lagerung beeinträchtigt und zudem auch, an jeder Lagerstelle, insgesamt eine geringere Stabilität der Gesamtanordnung der Lastabtragung nach sich zieht. Durch die an jeder Führungsbahn jeweils außenseitig angeordnete Labyrinthabdichtung wird zwar eine gute Abdichtung gegen das Eindringen von Verschmutzung o.ä. von dorther erreicht, jedoch ist noch immer die Möglichkeit gegeben, daß Verschmutzungen o.ä. zwischen Führungsbahn und Tragkörper von der jeweils innenliegenden Seite der Führungsbahn aus, nämlich vom Raum unterhalb der Lagerabdeckung zwischen den beiden Führungsbahnen, eindringen kann, zumal dort auch noch der Schneckenantrieb für die Bewegung der abzustützenden Struktur untergebracht ist.

Ausgehend hiervon liegt der Erfindung die Aufgabe zugrunde, eine verbesserte Dichtungsanordnung zu schaffen, die eine besonders hohe Verschmutzungsunempfindlichkeit für die Führungselemente, eine verbesserte Sicherheit gegen das Eindringen von Schwebeteilchen und Aerosolen sowie Feuchtigkeit bei gleichzeitig einer guten statischen und dynamischen Gesamteigenschaft des bewegten Systems gewährleistet.

Erfindungsgemäß wird dies mit einer Dichtungsanordnung mit den Merkmalen des Anspruchs 1 erreicht.

Die erfindungsgemäß vorgeschlagene Dichtungsanordnung führt zu einer bemerkenswert guten Abdichtung des Lagers gegenüber der Außenumgebung, in der eine Fertigungsatmosphäre vorliegt, wobei sich auch anspruchsvolle Vorgabewerte für die Verschmutzungsunempfindlichkeit der Führungselemente ohne weiteres erfüllen lassen. Gleichzeitig ist eine vorzügliche Sicherheit gegen das Eindringen von Schwebeteilchen, Aerosolen und Feuchtigkeit gegeben und die Gesamtkonstruktion führt auch zu einer guten statischen und dynamischen Gesamteigenschaft des bewegten Lagersystems.

Die erfindungsgemäße Dichtanordnung läßt ohne Schwierigkeit auch eine variable Einbaulage zu: So kann der Einbau vertikal, horizontal oder auch in sonst irgendeiner definierten Lage erfolgen, ohne daß hierdurch die Dichtwirkung wesentlich beeinträchtigt wird. Gleichzeitig läßt die erfindungsgemäße Dichtanordnung auch eine wirtschaftliche Gestaltung mit einem modularen Aufbau im Sinne eines Baukastensystems zu, wobei z.B. die Lagerabdeckung mit ihren beidseits abgewinkelten Seitenabschnitten sowie der die Labyrinthausnehmung ausbildende Körper neben dem Tragkörper mit der Führungsbahn und dem Lager selbst solche modularen Bauelemente für ein Baukastensystem darstellen können.

Die erfindungsgemäße Dichtungsanordnung weist auch eine Gesamtgestaltung mit montage-und servicefreundlichen Fügestellen auf, was insbesondere für eine Reinigung innerhalb der Regelwartungstermine günstig ist.

Wenn bei der erfindungsgemäßen Dichtanordnung Schwebstoffe und Aerosole von der Außenseite des Lagers her in die Labyrinthdichtung eintreten, verlangsamen sie auf ihrer Bahn durch die Labyrinthdichtung schon im ersten Labyrintharm ihre Strömungsgeschwindigkeit, so daß sich bei der nachfolgenden Labyrinth-Umlenkung und beim Eintreten in den anderen, gegenläufigen Labyrintharm die schwereren Teilchen am Boden der Labyrinthausnehmung absetzen. Dieser Effekt ist insbesondere dann wesentlich, wenn die erfindungsgemäße Dichtungsanordnung so eingebaut wird, daß die Labyrinthkanäle im wesentlichen vertikal verlaufen, so daß in ihnen gleichzeitig auch noch die Schwerkraft in gleicher Richtung auf eintretende Schmutzpartikel wirkt. In Verbindung mit der Umlenkung der Labyrinthkanäle um 180° ist die Abscheidewirkung von Schmutz bzw. Restschmutz sehr gut. Die sehr langen und sehr engen, mäanderförmig verlaufenden Strömungskanäle innerhalb der Labyrinthdichtung sorgen nicht nur für einen außerordentlich langen Strömungsweg, sondern auch für eine starke Verlangsamung der auftretenden Strömungsgeschwindigkeiten, insbesondere im Hinblick auf die sehr engen Kanalquerschnitte, in denen die Wandreibungsverluste bei einer dort fließenden Gasströmung erheblich sind.

Ein besonderer Vorteil der erfindungsgemäßen Dichtanordnung liegt auch darin, daß sie völlig berührungsfrei arbeitet und keinerlei zusätzlichen Kraftaufwand außer dem für die Verschiebung des Lagers erforderlichen Kraftaufwand bei einer Bewegung des Lagers erfordert. Die erfindungsgemäße Dichtungsanordnung kann vergleichsweise rasch montiert und demontiert werden, was bei der Ausführung von Wartungsarbeiten besonders vorteilhaft ist. Daneben kann auch das Entfernen von eventuell in den Mäandergängen der Labyrinthdichtung abgelagerten Schmutz- und Staubteilchen o.ä. nach dem Auseinanderbauen rasch und einfach erfolgen.

Eine besonders vorteilhafte Ausgestaltung der erfindungsgemäßen Dichtungsanordnung liegt dann vor, wenn das eingesetzte Lager als ein Luftlager ausgebildet ist. Dadurch ist erreichbar, daß sich eine insgesamt berührungslos arbeitende Lager/Dichtungseinheit erstellen läßt, was gerade bei mit höchster Präzision arbeitenden Maschinen, wie Koordinatenmeßvorrichtungen, von ganz besonderem Vorteil ist, weil dann bei der Verstellbewegung trotz der Abdichtung keine Reibungskräfte überwunden werden müssen. In Fällen, in denen dieser Gesichtspunkt nicht so wichtig ist, kann das eingesetzte Lager selbstverständlich ohne weiteres auch in Form jeder anderen geeigneten Lagerform, etwa als Wälzlager oder sogar in Ausnahmefällen auch als Gleitlager, ausgebildet sein.

Eine vorteilhafte Ausgestaltung der Erfindung besteht auch darin, daß die Seitenflächen des Tragkörpers, auf dem die Führungsbahn sitzt, und die abgewinkelten Seitenabschnitte der Lagerabdeckung jeweils im wesentlichen senkrecht zur Fläche der Führungsbahn verlaufen. Dadurch läßt sich eine Minimierung des Platzbedarfs der erfindungsgemäßen Dichtungsanordnung seitlich zum Verlauf der Führungsbahn erreichen. Es kann jedoch in besonderen Einsatzfällen auch vorteilhaft sein, wenn die Seitenflächen des Tragkörpers schräg und nicht senkrecht zur Ebene der Führungsbahn verlaufen, wobei in einem solchen Fall dann vorzugsweise auch die abgewinkelten Seitenabschnitte der Lagerabdeckung eine entsprechende Ausrichtung aufweisen sollten.

Da bei der erfindungsgemäßen Dichtungsanordnung in jede U-förmige Labyrinthausnehmung ein U-förmiger Seitenschenkel hineinragt, wird ein besonders langer Strömungsweg innerhalb der Labyrinthdichtung erreicht und es findet dabei eine zweimalige rechtwinkelige Umlenkung statt, nämlich an den beiden Endkanten des Mittelschenkels des U-förmigen Seitenabschnitts. Dabei wird jeweils zwischen den beiden Mittelschenkeln der beiden ineinander liegenden U-Querschnitte ein Schmutzablagerungsbereich im mäanderförmigen Verlauf des Strömungsquerschnitts innerhalb dieser Labyrinthdichtung geschaffen, innerhalb dessen sich, wenn in weiter bevorzugter Ausgestaltung der Erfindung die Labyrinthkanäle außerhalb des Reinigungsbereiches im wesentlichen vertikal verlaufen, infolge der neben der Umlenkung noch auf die Teilchen in den Kanälen einwirkenden Schwerkraft alle schwereren Teilchen gezielt absetzen können. Dies ermöglicht eine einfache und rasche Reinigung bei Wartungsarbeiten, wobei die Böden der Labyrinthausnehmung in allen Bereichen, die außerhalb der Stelle liegen, an der sich gerade das Lager befindet, die leicht zugänglich ist.

Durch die Ausbildung der erfindungsgemäßen Dichtanordnung wird neben einer vorzüglichen Abdichtwirkung trotz einer vollständigen Überdeckung der Führungsbahn durch die Führungsbahnabdeckung und trotz der Anordnung des Lagers innerhalb des von der Führungsbahnabdeckung abgedeckten Bereiches dennoch eine problemfreie Abstützung der außerhalb der Dichtungsanordnung liegenden, abzustützenden Struktur (etwa einer Brücke oder eines Portales einer Koordinatenmeßvorrichtung) erreicht : dabei werden die von der abzustützenden Struktur über das Lager abzutragenden Kräfte auf dieses in der Form übertragen, daß die Lagerabdeckung als kraftübertragendes Element zwischen beiden eingesetzt wird, die infolge ihrer U-förmigen Ausgestaltung die unteren Enden der Führungsbahnabdeckung umgreifen kann, um so von der Außenseite der Führungsbahnabdeckung her auf deren Innenseite zu gelangen und damit eine Verbindung von der außen liegenden, abzustützenden Struktur zum Lager herstellen zu können. Die verschiedenen ineinander greifenden Teile ergeben in ihrer Gesamtwirkung eine hervorragende Abdichtung nach außen hin, wobei gleichzeitig durch die gewählte Formgebung der Führungsbahnabdeckung und der Lagerabdeckung eine problemfreie Kraftübertragung von der abzustützenden Struktur, die außerhalb der Führungsbahnabdeckung liegt, auf die Abstützlager im Inneren der Führungsbahnabdeckung möglich wird.

Die Labyrinthausnehmungen können in jeder geeigneten Weise am Tragkörper seitlich der Führungsbahn ausgebildet bzw. angebracht sein. Ganz besonders bevorzugt besteht jedoch jede Labyrinthausnehmung aus einem am Tragkörper seitlich angebrachten Formprofil, das vorzugsweise auf einem Maschinengrundkörper befestigt ist, an dem gleichzeitig auch der Tragkörper befestigt sein kann. Hierdurch wird zwar eine feste Verbindung zwischen Formprofil und Tragkörper geschaffen, ohne daß jedoch die beiden Teile direkt aneinander befestigt wären, so daß das Formprofil auch, falls nötig, in seiner Ausrichtung relativ zum Tragkörper bei der Montage verändert werden kann.

Bei den zuvor geschilderten Ausführungen der erfindungsgemäßen Dichtungsanordnung wird besonders bevorzugt die vom Formprofil ausgebildete Labyrinthausnehmung auf ihrer dem Tragkörper abgewandten Seite noch über das freie Ende des auf der Außenseite liegenden Schenkels des in sie eingreifenden Seitenabschnitts hinaus verlängert, und zwar soweit, daß sie die Befestigungsstelle zwischen letzterem und der abzustützenden Struktur überragt und dann an ihrem Ende mit einem zu der vom Lager abzustützenden Struktur hin abgewinkelten Endbereich versehen ist. Wenn dieser Endbereich soweit übersteht, daß er bis in die Nähe der ihm zugewandten Seiten der abzustützenden Struktur reicht, diese aber nicht berührt, kann auch im Lagerabschnitt oberhalb der Befestigung der abzustützenden Struktur an dem Außenschenkel des Seitenabschnitts der Lagerabdeckung noch zusätzlich eine weitere Abdeckung erreicht werden, die den Dichtungseffekt der Dichtungsanordnung noch weiter verbessert.

Die Lagerabdeckung kann ebenso wie das Formprofil für die Ausbildung der Labyrinthausnehmung in jeder geeigneten Form ausgebildet sein und gegebenenfalls auch aus mehreren miteinander verbundenen Einzelteilen bestehen. Ganz besonders bevorzugt werden jedoch die Lagerabdeckung mit ihren Seitenabschnitten und/oder das Formprofil einstückig aus einer Blechform ausgebildet, die dann auch jeweils als ein modulares Bauelement eingesetzt und vergleichsweise einfach hergestellt werden kann. Hierdurch wird auch der Montageaufwand insgesamt erleichtert und insbesondere bei der einstückigen Ausbildung der Lagerabdeckung mit den Seitenabschnitten eine besonders gute Kraftübertragung zwischen dem Lager und der abzustützenden Struktur erreicht.

Eine weitere bevorzugte Ausgestaltung der erfindungsgemäßen Dichtanordnung besteht auch darin, daß das die Labyrinthausnehmung ausbildenden Formprofil auf seiner dem Tragkörper zugewandten Seite einen zur Seitenfläche des Tragkörpers im wesentlichen parallelen Seitenschenkel aufweist, der in Richtung zur Führungsbahn hin verläuft, jedoch in einem Abstand vor deren Lageniveau endet, wobei, erneut, bevorzugt, das Formprofil mit dem Seitenschenkel an der zugewandten Seitenfläche des Tragkörpers anliegt. Hierdurch kann erreicht werden, daß selbst dann, wenn ein geringer Teil an Restschmutz durch den zwischen diesem Seitenschenkel des Formprofils und dem zugeordneten Seitenabschnitt der Lagerabdeckung ausgebildeten Labyrinthkanal tatsächlich noch hindurchtreten sollte, sich dann in dem dahinter zwischen der Seitenfläche des Tragkörpers und der ihr zugewandten Seitenfläche des Seitenabschnitts der Lagerabdeckung ausbildenden Kanalstück (vor Erreichen der Oberfläche des Tragkörpers, auf der die Führungsbahn angeordnet ist) absetzen und damit erst gar nicht bis zu der Führungsbahn hin gelangen kann.

Die Erfindung wird nachfolgend anhand der Zeichnung im Prinzip beispielshalber noch näher erläutert. Es zeigen:
- Fig. 1: einen Prinzipquerschnitt durch eine erfindungsgemäße Dichtungsanordnung;
- Fig. 2: eine perspektivische Prinzipdarstellung der bei der Anordnung aus Fig. 1 eingesetzten Lagerabdeckung (als Einzelbauteil), und
- Fig. 3: eine perspektivische Prinzipdarstellung des oberen Abschnitts der bei der Anordnung aus Fig. 1 zur Ausbildung der Labyrinthausnehmung eingesetzten Formprofils (als Bauteil).

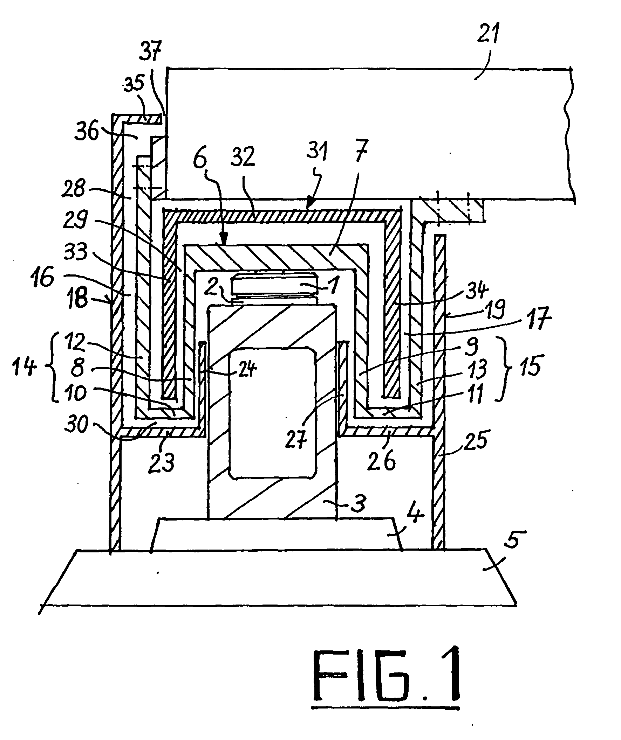

Fig. 1 zeigt einen Querschnitt durch eine Dichtungsanordnung, die dazu dient, ein als Luftlager ausgebildetes Lager 1 gegenüber einer Außenumgebung abzudichten.

Das Lager 1 stützt sich auf einer Führungsbahn ab, die ihrerseits oben auf einem als Hohlprofilträger ausgebildeten Tragkörper 3 angebracht ist und sich über die Länge dieses Tragkörpers 3 hinweg erstreckt.

Der Tragkörper 3 ist seinerseits über seine Länge hinweg über zwei oder mehrere quer zu seiner Längserstreckung liegende Tragstege 4 auf einem in Fig. 1 nur angedeuteten Maschinengrundkörper 5 einer Koordinatenmeßvorrichtung abgestützt.

Das Lager 1 ist auf seiner (der Führungsbahn 2 gegenüberliegenden) Oberseite mit einer Lagerabdeckung verbunden, der allgemein das Bezugszeichen 6 zugeordnet ist.

Die Lagerabdeckung 6 weist einen oberhalb des Lagers 1 angebrachten Quersteg 7 auf, der oberhalb des Lagers 1 parallel zur Führungsbahn 2 liegt und sich beidseits des Lagers 1 so weit erstreckt, daß er seitlich sowohl die Führungsbahn 2, wie auch den Tragkörper 3 überspannt.

Der Quersteg 7 der Lagerabdeckung 6 geht an seinen beiden seitlichen Endbereichen jeweils in einen um 90° abgewinkelten Seitenschenkel 8 bzw. 9 über, wobei die Seitenschenkel 8, 9 auf die Seite hin abgewinkelt sind, auf welcher der Tragkörper 3 liegt, also bei der Darstellung in Fig. 1 nach unten. An ihrem unteren Ende geht jeder Seitenschenkel 8 bzw. 9 in einen rechtwinkelig zu ihm nach der Außenseite hin (also von dem Tragkörper 3 weg gerichtet) verlaufenden Zwischensteg 10 bzw. 11 über, der an seinem außen liegenden Ende in einen um 90° zu ihm abgewinkelten Außensteg 12 bzw. 13 übergeht Die Außenstege 12 bzw. 13 laufen parallel zu dem jeweiligen Seitenschenkel 8 bzw. 9 und in einem Abstand zu diesem nach außen hin versetzt wieder nach oben zurück, so daß jeweils der Seitenschenkel 8, der Zwischensteg 10 und der Außensteg 12 bzw. der Seitenschenkel 9, der Zwischensteg 11 und der Außensteg 13 gemeinsam einen im Querschnitt U-förmig ausgebildeten Seitenabschnitt 14 bzw. 15 der Lagerabdeckung 6, jeweils auf einer Seite des Tragkörpers 3, ausbilden.

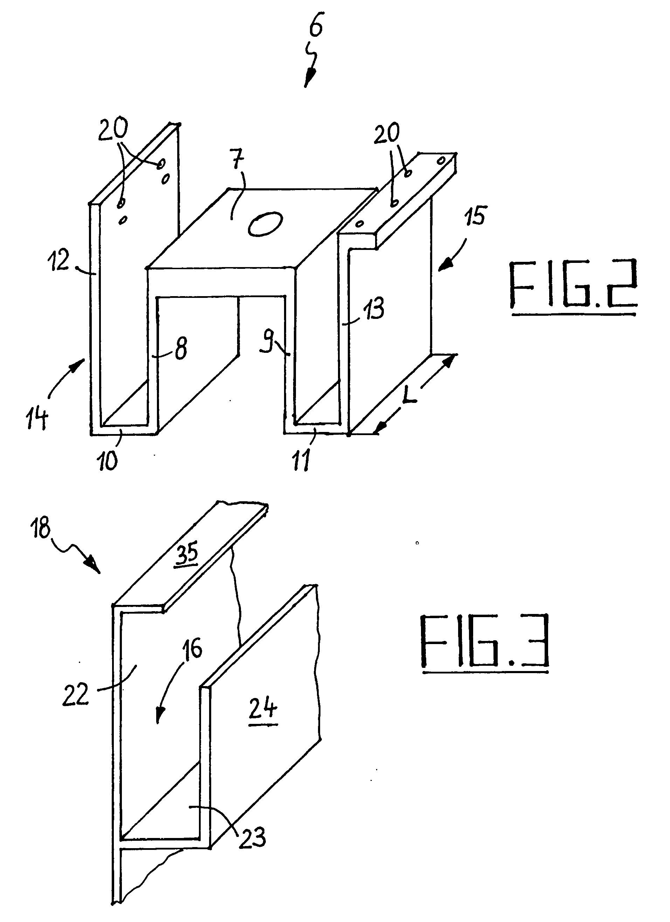

In Fig. 2 ist in perspektivischer Prinzipdarstellung die Gesamtform der Lagerabdeckung 6 (alleinstehend, ohne andere Teile) dargestellt, wobei die hier gezeigte Lagerabdeckung 6 einstückig aus einer geeigneten Blechform gefertigt ist. Sie könnte auch aus einem Gußteil, z.B. einem Leichtmetall-Gußteil, oder auch (was in den Figuren nicht dargestellt ist) aus mehreren, miteinander verbundenen, aneinander befestigten Einzelteilen bestehen, die letztlich die dargestellte Form ergeben.

Die Lagerabdeckung 6 erstreckt sich in Längsrichtung der Führungsbahn 2 nur über eine Länge L, die ausreichend ist, um das Lager 1 auch in dieser Richtung genügend zu überdecken.

Wie die Fig. 1 und 2 zeigen, erstrecken sich die Außenstege 12 bzw. 13, ausgehend vom jeweils zugeordneten Zwischensteg 10 bzw. 11 und im wesentlichen rechtwinkelig zu diesem abgewinkelt, auf die Seite hin, auf der auch der Quersteg 7 der Lagerabdeckung 6 bzw. (im eingebauten Zustand) das Lager 1 liegt, und sie sind in ihrer Länge deutlich über die Oberfläche des Quersteges 7 und das Lageniveau des Lagers 1 hinaus soweit verlängert, daß sie beide über die Oberseite des Lagers 1 hinausragen.

Jeder Außensteg 12 bzw. 13 ist an seinem Endbereich in geeigneter Weise (in den Fig. 1 und 2 nur rein prinzipiell durch Befestigungslöcher 20 angedeutet) mit einer abzustützenden Struktur verbunden, die in Fig. 1 nur ganz prinzipiell dargestellt sowie allgemein mit dem Bezugszeichen 21 bezeichnet ist und in dem hier angesprochenen Fall einer Koordinatenmeßvorrichtung z.B. aus einer eine Meßauflage überspannenden Brücke besteht ("Brückenmeßgerät"), auf der ein (in der Figur nicht dargestellter) Querschlitten beweglich geführt ist, der seinerseits eine (in der Figur ebenfalls nicht dargestellte) vertikal bewegliche Pinole trägt, die an ihrem unteren Ende z.B. mit einem (ebenfalls nicht dargestellten) Tastkopf zum Erfassen der Abmessungen eines Werkstücks versehen ist.

Die Lagerabdeckung 6 ragt mit ihren Seitenabschnitten 14, 15 in im Querschnitt im wesentlichen U-förmig ausgebildete Labyrinthöffnungen 16 bzw. 17 hinein, die jeweils von einer Profilform 18 bzw. 19 ausgebildet werden. Jede Profilform 18, 19 ist ihrerseits auf dem Maschinengrundkörper 5 in geeigneter Form befestigt wobei die Befestigung selbst in Fig. 1 nicht im einzelnen dargestellt ist.

Fig. 3 zeigt in einer perspektivischen Teildarstellung die in Fig. 1 auf der linken Seite dargestellte Profilform 18.

Die Profilform 18 besteht aus einer Blechform und weist auf der Außenseite einen im wesentlichen senkrecht zum Maschinengrundkörper 5 sowie parallel zu der Seitenfläche des Tragkörpers 3 verlaufenden Außenschenkel 22 auf, von dem ein Querschenkel 23 in Richtung zum Tragkörper 3 hin senkrecht vorspringt und in der Nähe der zugeordneten Seitenwand des Tragkörpers 3 in einen rechtwinklig nach oben gerichteten Innenschenkel 24 übergeht. Der Außenschenkel 22, der Querschenkel 23 und der Innenschenkel 24 bilden eine im Querschnitt U-förmige Labyrinthausnehmung 16, in die, wie Fig. 1 zeigt, der Seitenabschnitt 14 der Lagerabdeckung 6 so hineinragt, daß der Zwischensteg 10 innerhalb der Labyrinthausnehmung 16 in einem Abstand vom Querschenkel 23 der Labyrinthausnehmung 16 parallel zu diesem liegt.

Gleichermaßen weist die Profilform 19 auf der gegenüberliegende Seite der Dichtanordnung einen Außenschenkel 25 auf, von dem in Richtung zu dem Tragkörper 3 hin senkrecht ein Querschenkel 26 vorspringt, der an seinem Ende in einen nach oben und direkt neben der zugeordneten Seitenfläche des Tragkörpers 3 verlaufenden Innenschenkels 27 übergeht. Auch durch den Außenschenkel 25, den Querschenkel 26 und den Innenschenkel 27 dieser Profilform 19 wird eine im Querschnitt U-förmige Labyrinthausnehmung 17 gebildet, in die - ebenso wie auf der gegenüberliegenden Seite - der auf dieser Seite vorliegende Seitenabschnitt 15 der Lagerabdeckung 6 hineinragt. Auch hier ist der die untere Endfläche des Seitenabschnitts 15 bildende Zwischensteg 11 in einem Abstand von dem parallel zu ihm verlaufenden und den Boden der Labyrinthausnehmung 17 bildenden Querschenkel 26 der Profilform 19 angeordnet.

Die jeweils offene Seite des U-förmigen Querschnitts der Seitenabschnitte 14 und 15 weist in eine vom Boden der zugeordneten Labyrinthausnehmung 16 bzw. 17 wegführende Richtung, also bei der Darstellung in Fig. 1 nach oben.

Wenn jeder Seitenabschnitt 14, 15 jeweils in die zugehörige Labyrinthausnehmung 16, 17 eingeführt ist, bildet er zusammen mit dieser jeweils eine Labyrinthdichtung aus, in der die Labyrinthkanäle, die von oben und außen her in das Labyrinth hinein- und letztlich in den das Lager 1 umgebenden Innenraum einmünden, eine mäanderförmige Kanalführung mit zwei zueinander parallel verlaufenden Labyrinthkanälen 28 und 29 sowie einen quer (nämlich rechtwinkelig) zu beiden verlaufenden Verbindungskanal 30 bilden. Eine völlig gleiche Ausgestaltung findet sich auf der gegenüberliegenden Seite.

Schließlich ist, wie Fig. 1 zeigt, zwischen der dem Lager 1 abgewandten Oberseite der Lagerabdeckung 6 bzw. deren Querstegs 7 und der Unterseite der abzustützenden Struktur 21 noch eine Führungsbahnabdeckung 31 vorgesehen. Diese weist wie Fig. 1 zu entnehmen ist, einen nach unten offenen, U-förmigen Gesamtquerschnitt auf: Dieser besteht aus einem oben liegenden, parallel zur und über der Oberseite des Querstegs 7 der Lagerabdeckung 6 verlaufenden Querabschnitt 32, der seitlich den Quersteg 7 überspannt und dann in zwei rechteckig zu ihm abgewinkelte Seitenabschnitt 33, 34 übergeht die im Inneren der U-förmigen Ausnehmung, welche der auf jeder Seite vorliegende Seitenabschnitt 14 bzw. 15 ausbildet, parallel zu dessen jeweiligem Seitenschenkel 8 bzw. 9 und dem zugeordneten Außensteg 12 bzw. 13 nach unten hin verlaufen. Das freie Ende jedes Seitenabschnitts 33 bzw. 34 endet wiederum in einem Abstand vor dem Zwischensteg 10 bzw. 11 des jeweiligen Seitenabschnitts 14 bzw. 15. Auch ragt jeder Seitenabschnitt 33 bzw. 34 so in den U-förmigen Aufnahmeraum des zugeordneten Seitenabschnitts 14 bzw. 15 der Lagerabdeckung 6 hinein, daß zwischen jedem Seitenabschnitt 33 bzw. 34 und den beiden ihm zugewandten Seitenflächen des Seitenschenkels 8 bzw. 9 und des Außensteges 12 bzw. 13 ein Spalt vorliegt. Bevorzugt wird dabei jeder Seitenabschnitt 33, 34 der Führungsbahnabdeckung 31 etwa mittig in dem U-förmigen Aufnahmeraum des zugehörigen Seitenabschnitts 14, 15 der Lagerabdeckung 6 angebracht.

Die Führungsbahnabdeckung 31 erstreckt sich über die gesamte Länge der Führungsbahn 2 und ist an ihren beiden Enden jeweils in geeigneter Weise mit dem Maschinengrundgestell 5 oder einer auf diesem montierten (in der Figur nicht gezeigten) Halterung befestigt.

Die dargestellte Anordnung gestattet es, daß durch die Führungsbahnabdeckung 31 die Führungsbahn 2 über ihre gesamte Länge hinweg nach außen hin abgedeckt wird, während gleichzeitig durch die gezeigte Ausgestaltung der Lagerabdeckung 6 mit ihren nach oben hin offenen U-förmigen Seitenabschnitten 14,15 ein Herausführen der Lagerabdeckung 6 aus dem von der Führungsbahnabdeckung 31 überdeckten Bereich auf die Außenseite der Anordnung möglich und dort durch Zurückführen nach oben hin ein Anschluß an die abzustützende Struktur 21 gegeben wird.

Die gezeigte Anordnung der einander nicht berührenden, aber wechselseitig ineinander greifenden U-förmigen Querschnitte der Führungsbahnabdeckung 31, der Seitenabschnitte 14 bzw. 15 der Lagerabdeckung 6 und der Labyrinthausnehmungen 16 bzw. 17 gestattet dabei eine wirksame Abdichtung des das Lager 1 und die Führungsbahn 2 umgebenden Innenraums der Lagerabdeckung 6 zur Außenseite der Gesamtanordnung hin, wobei gleichzeitig die Lagerabdeckung 6 nicht nur eine zur Abdichtung beitragende Funktion als Bestandteil der sie umfassenden Labyrinthdichtung, sondern zusätzlich auch noch die Funktion der Kräfteübertragung zwischen der abzustützenden Struktur 21 und dem zugehörigen Lager 1 ausübt.

Wie in Fig. 1 und Fig. 3 dargestellt weist der auf der linken Seite (also auf der Außenseite der Koordinatenmeßvorrichtung) liegende Außenschenkel 22 der Profilform 18 an seiner oberen Seite eine zu ihm etwa rechtwinkelig in Richtung auf die abzustützende Struktur 21 hin verlaufenden Endbereich 35 auf, der sich über die gesamte Länge der Profilform 18 erstreckt und mit seinem freien Ende in einem kleinen Abstand vor der zugeordneten Seitenfläche der Struktur 21 endet. Auf diese Weise findet im Bereich der Lagerstelle des Lagers 1 nach oben hin auch noch eine zusätzliche Abdichtung zur Außenseite hin statt, da von oben her ein Eindringen in den zwischen der Profilform 18 und der abzustützenden Struktur 21 gebildeten Innenraum 36 hinein nur über diesen engen Spalt 37 möglich und dadurch erheblich behindert wird.

Sofern aus diesem Raum 36 z.B. Schmutzpartikel o.ä. in den außenseitig liegenden, senkrecht nach oben verlaufenden Labyrinthkanal 28 der von der Profilform 18 und dem in sie hinein ragenden Seitenabschnitt 14 gebildeten Labyrinthdichtung eintreten, werden diese mit der in Kanallängsrichtung strömenden Luft zu dem unteren Querkanal 30 geführt. Der in dem Kanal 28 strömende Gas- bzw. Luftstrom wird dort rechtwinkelig in den Querkanal 30 umgelenkt und muß an dessen gegenüberliegendem Ende erneut rechtwinkelig umgelenkt werden, um in den nach oben laufenden Labyrinthkanal 29 eintreten zu können. Da die Dimensionen der Querschnitte so gewählt sind, daß die Kanalquerschnitte der Labyrinthkanäle sehr klein sind, findet eine ganz erhebliche Geschwindigkeitsverringerung der in den Labyrinthkanälen vom Einlaß bis zum Auslaß strömenden Luft statt, wobei die zweifache rechtwinkelige Umlenkung in Verbindung mit der dort auch wirkenden Schwerkraft zu einem Absetzen der meisten in der Luft eventuell vorhandenen Partikel und Schmutzteilchen in dem Querkanal 30 oben auf dem Querschenkel 23 der Profilform 18 führt. Auf diese Weise sammeln sich die abgeschiedenen Partikel am Boden der Labyrinthausnehmung 16 (völlig gleichermaßen ist die Situation auch auf der gegenüberliegenden Seite), wobei zudem durch die Notwendigkeit eines Nach-Oben-Strömens der Luft in dem innen liegenden Labyrinthkanal 29 den Transport von dort eventuell doch noch vorhandenen Kleinstpartikeln erneut behindert, da auch hier die Schwerkraft in entgegengesetzter Richtung auf die Partikel wirkt.

Da, wie Fig. 1 erkennen läßt, das obere Ende des Innenschenkels 24 der Profilform 18 in einem Abstand unterhalb der oberen Fläche des Tragkörpers 3 endet, auf der die Führungsbahn 2 angeordnet ist, werden eventuell doch noch in dem Innenkanal 29 in der dort strömenden Luft vorhandene Kleinstpartikel nach ihrem Austreten aus diesem Kanal in dem dann erweiterten Kanalquerschnitt (bis zum Erreichen der oberen Abschlußfläche des Tragkörpers 3), also direkt oberhalb der Oberkante des Innenschenkels 24, abgesetzt und gelangen erst gar nicht bis zur Führungsbahn 2.

Zu alledem kommt auch noch hinzu, daß das eingesetzte Luftlager 1 stets in Gegenrichtung etwas Luft ausbläst, die dem Eindringen von Partikeln aus dem inneren, senkrecht nach oben gerichteten Labyrinthkanal 38 in den Raum um das Lager 1 herum entgegenwirkt.

Die gezeigte Anordnung ergibt eine hervorragende Abdichtung des um das Lager 1 und die Führungsbahn 2 angeordneten Innenraums innerhalb der Führungsbahnabdeckung 31 gegenüber der Außenseite, wobei die eingesetzte Labyrinthdichtung völlig berührungslos arbeitet und wegen der speziellen Formgebung der Lagerabdeckung 6 und deren gleichzeitiger Funktion als kraftübertragendes Bauteil eine problemfreie Lastabtragung von der abzustützenden Struktur 21 her über das Lager 1 auf die Führungsbahn 2 erfolgen kann.

Die Dimensionierung der Labyrinthkanäle und der auch sonst noch auftretenden Spalte zwischen den einzelnen Teilen kann jederzeit so vorgenommen werden, daß eine ausreichend gute Abdichtung über sehr kleine Kanalquerschnitte erreicht werden kann, dennoch aber ein völlig berührungsloses Arbeiten der gezeigten Anordnung aus Dichtung und Lager 1 gegeben ist. Es handelt sich hierbei also um eine insgesamt reibungslos arbeitende Anordnung, was gerade im Hinblick auf den Einsatz bei hochpräzise arbeitenden Meßgeräten von unschätzbarem Vorteil ist.

Durch die eng wählbaren Kanalweiten wird auch sichergestellt, daß die - in Längsrichtung der Führungsbahn 2 gesehen - vor und hinter der die Lagerstelle überdeckenden Lagerabdeckung 6 in Verfahrrichtung ebenfalls vorhandenen Spalte die Gesamtdichtwirkung nicht wesentlich beeinflussen.

Dadurch, daß bei der gezeigten Anordnung die Hauptkanäle der Labyrinthdichtung rechtwinkelig zur Ebene der Führungsbahn 2 verlaufen und die Führungsbahnabdeckung 6 bis deutlich unterhalb der Oberfläche des Stützkörpers 3 nach unten ragen kann, ergibt sich insgesamt die Möglichkeit zu der in den Figuren dargestellten, außerordentlich vorteilhaften, einfach montier- und herstellbaren und dennoch hervorragend wirksamen Dichtungsanordnung.

Der auf den Böden der Labyrinthausnehmungen 14 und 15 sich absetzende Restschmutz kann außerhalb des Bereiches, der von der Lagerabdeckung 6 überdeckt wird, ohne Schwierigkeit jederzeit leicht gereinigt werden, da in diesen Bereichen außerhalb der Lagerstelle die Labyrinthausnehmungen 16 und 17 von oben her unschwer zugängig sind.

Auch wenn in den Figuren eine parallele Anordnung der Labyrinthkanäle und der einander zugewandten Flächen der ineinander greifenden Teile gezeigt ist kann, falls gewünscht durchaus auch eine andere Form der Kanalquerschnitte gewählt werden, die allerdings in den Figuren nicht dargestellt ist. So ist es z.B. möglich, durch eine entsprechende Formgebung der ineinander bzw. nebeneinander liegenden Schenkel der Einzelteile eine in Strömungsrichtung der Labyrinthkanäle von der Außen- zur Innenseite hin konvergierende Kanalweite zu erreichen, um auch hierdurch noch das Hindurchströmen von Luft oder Gasen in den Umgebungsraum für das Lager 1 bzw. die Führungsbahn 2 zu erschweren. Die Verwendung rechteckiger U-förmiger Aufnahmequerschnitte und rechteckig zueinander gerichteter Abwinkelungen an den einzelnen Teilen sowie konstanter Wanddicken bringt jedoch den großen Vorteil, daß hierbei z.B. die einzelnen Teile aus Blechformen eines Bleches mit konstanter Dicke hergestellt werden können.

Da die beschriebene Lager- und Dichtanordnung keine Längsführung des Lagers 1 beinhaltet, versteht es sich von selbst daß die für die Bewegung dieses Lagers entlang der Führungsbahn 2 ebenfalls erforderliche Führung an einer anderen Stelle der Gesamtvorrichtung angebracht sein muß.

## Patentansprüche

1. Dichtungsanordnung für ein lastabtragendes Lager (1), das sich auf einer auf einem Tragkörper (3) vorgesehenen Führungsbahn (2) abstützt, längs derselben beweglich angeordnet und mit einer Lagerabdeckung (6) verbunden ist, die den Tragkörper (3) beidseits überspannt sowie auf jeder Seite desselben einen auf dessen Seite hin abgewinkelten Seitenabschnitt (14, 15) mit einer im Querschnitt U-förmigen Ausbildung aufweist, insbesondere für Koordinatenmeßmaschinen, wobei beidseits am Tragkörper (3) jeweils eine über die ganze Länge der Führungsbahn (2) hinweg verlaufende, im Querschnitt ebenfalls U-förmige Formausnehmung (16, 17) angebracht ist, in die jeweils eine der beiden U-förmigen Ausbildungen eines Seitenabschnitts zur Ausbildung einer Labyrinthdichtung mit dieser hineinragt, wobei das geschlossene Ende jedes Seitenabschnitts (14, 15) jeweils innerhalb der entsprechenden Formausnehmung (16, 17) liegt,
wobei ferner die Führungsbahn (2) über ihre ganze Länge hinweg von einer im Querschnitt ebenfalls U-förmigen Führungsbahnabdeckung (31) überspannt wird, weiche die Lagerabdeckung (6) und deren Seitenabschnitte (14, 15) überdeckt und im Bereich des Lagers (1) jeweils mit einem Seitenschenkel (33, 34) in die Ausnehmung des U-förmigen Querschnitts des zugeordneten Seitenabschnitts (14, 15) der Lagerabdeckung (6) hineinragt,
und wobei der jeweils seitlich außen liegende Schenkel (12, 13) des U-förmigen Querschnitts jedes Seitenabschnitts (14, 15) über das Niveau des Mittelschenkels (7) der U-förmigen Lagerabdeckung (6) hinaus verlängert sowie dort mit einer vom Lager (1) abzustützenden Struktur (21) verbunden ist.

2. Dichtungsanordnung nach Anspruch 1, bei der die Seitenflächen des Tragkörpers (3) und die Seitenabschnitte (14, 15) der Lagerabdeckung (6) jeweils im wesentlichen senkrecht zur Fläche der Führungsbahn (2) verlaufen.

3. Dichtungsanordnung nach Anspruch 1 oder 2, bei der jede Formausnehmung (16, 17) von einem Formprofil (18, 19) gebildet wird.

4. Dichtungsanordnung nach Anspruch 3, bei der jedes Formprofil (18, 19) und der Tragkörper (3) auf einem Maschinengrundkörper (5) befestigt sind.

5. Dichtungsanordnung nach Anspruch 3 oder 4, bei der die vom Formprofil (18) auf der Außenseite des Tragkörpers (3) ausgebildete Ausnehmung (16) auf ihrer dem Tragkörper (3) abgewandten Seite über das freie Ende des außenliegenden Schenkels (12) des in sie eingreifenden Seitenabschnitts (14) hinaus verlängert und an ihrem Ende mit einem zu der vom Lager (1) abzustützenden Struktur (21) hin abgewinkelten Endbereich (35) versehen ist.

6. Dichtungsanordnung nach einem der Ansprüche 1 bis 5, bei der die Lagerabdeckung (6) mit ihren Seitenabschnitten (14, 15) als einstückige Blechform ausgebildet ist.

7. Dichtungsanordnung nach einem der Ansprüche 3 bis 6, bei der jedes Formprofil (18, 19) als einstückige Blechform ausgebildet ist.

8. Dichtungsanordnung nach einem der Ansprüche 1 bis 7, bei der das Lager (1) als Luftlager ausgebildet ist.

9. Dichtungsanordnung nach einem der Ansprüche 3 bis 8, bei dem jedes Formprofil (18, 19) auf seiner dem Tragkörper (3) zugewandten Seite einen zur Seitenfläche des Tragkörpers (3) im wesentlichen parallelen Seitenschenkel (24, 27) aufweist, der in Richtung zur Führungsbahn (2) hin verläuft, jedoch in einem Abstand von deren Lageniveau endet.

10. Dichtungsanordnung nach Anspruch 9, bei der jedes Formprofil (18, 19) mit seinem Seitenschenkel (24, 27) an einer zugewandten Seitenfläche des Tragkörpers (3) anliegt.

## Claims

1. A sealing arrangement for a load-bearing bearing (1), in particular, for a coordinate-measuring machine, supported on a guide rail (2) provided on a support body (3), arranged to move along said guide path and connected with a bearing covering (6) that straddles the support body (3) on both sides and has on each side a side section (14, 15) bent toward its side with a construction that is U-shaped in cross-section; whereby on both sides, running on both sides of the support body (3), a similarly U-shaped form recess (16, 17) is applied in each case, running over the entire length of the guide rail (2), into which each of said two U-shaped formations of the side section extends to form a labyrinth seal with it, where the closed end of each side section (14, 15) lies within the corresponding form recess (16, 17) in each case,
where, further, the guide rail (2) is straddled over its entire length by a guide-rail cover (31), similarly U-shaped in cross-section, which covers the bearing cover (6) and its side sections (14, 15), and extends in the area of the bearing (1) in each case with a side limb (33, 34) into the recess of the U-shaped cross-section of the associated side section (14, 15) of the bearing cover (6),
and where in each case the outer side limb (12, 13) of the U-shaped cross section of each side section (14, 15) extends beyond the level of the middle limb (7) of the U-shaped bearing cover (6), and is connected there with a structure (21) supported by the bearing (1).

2. A sealing arrangement according to claim 1, in which the side surfaces of the support body (3) and the side sections (14, 15) of the bearing cover (6) are essentially perpendicular to the surface of the guide rail (2) in each case.

3. A sealing arrangement according to claim 1 or 2, in which each form recess (16, 17) is built from a form profile (18, 19).

4. A sealing arrangement according to claim 3, where each form profile (18, 19) and the support body (3) are attached to a machine-body base (5).

5. A sealing arrangement according to claim 3 or 4, in which the recess (16) formed by the form profile (18) on the outer side of the support body (3), on the side facing away from the support body (3) extends beyond the free end of the outlying limb (12) of the side section (14) extending into it, and is provided at its end with an end area (35) bent towards the structure (21) to be supported by the bearing (1).

6. A sealing arrangement according to one of claims 1 through 5, in which the bearing cover (6) with its side sections (14, 15) is constructed from a single piece of sheet metal.

7. A sealing arrangement according to one of claims 3 through 6, in which each form profile (18, 19) is constructed from a single piece of sheet metal.

8. A sealing arrangement according to one of claims 1 through 7, where the bearing (1) is built as an air bearing.

9. A sealing arrangement according to one of claims 3 through 8, where each form profile (18, 19) has a side limb (24, 27) on its side facing towards the support body (3), essentially parallel to the side surface of the support body (3), which runs in the direction of the guide rail (2), but ends at a distance from its position level.

10. A sealing arrangement according to claim 9, in which each form profile (18, 19) lies with its side limb (24, 27) against a side-facing surface of the support body (3).

## Revendications

1. Dispositif d'étanchéité pour un palier (1) porteur de charge, qui s'appuie sur une voie de guidage (2) prévue sur un corps porteur (3), est disposé de façon mobile le long de celle-ci et est relié à un revêtement de palier (6), qui recouvre le corps porteur (3) des deux côtés et présente sur chaque côté de ce corps une partie latérale (14, 15) coudée en direction de son côté avec une réalisation à section en forme de U, en particulier pour des machines de mesure de cordonnées, un évidement de moulage (16, 17) également à section en forme de U, s'étendant sur toute la longueur de la voie de guidage (2), étant placé sur chacun des deux côtés sur le corps porteur (3), évidement dans lequel dépasse respectivement l'une des deux réalisations en forme de U d'une partie latérale pour la réalisation d'un joint à labyrinthe avec celui-ci, l'extrémité fermée de chaque partie latérale (14, 15) étant chaque fois disposée à l'intérieur de l'évidement de moulage (16, 17) correspondant, la voie de guidage (2) étant recouverte également sur toute sa longueur par un revêtement de voie de guidage (31) également en U en section, lequel masque le revêtement de palier (6) et ses parties latérales (14, 15) et dépasse dans la zone du palier (1) respectivement avec une branche latérale (33, 34) dans l'évidement de la section en U de la partie latérale (14, 15) attribuée du revêtement de palier (6),
et la branche (12, 13), située sur le côté à l'extérieur, de la section en U de chaque partie latérale (14, 15) étant prolongée au-delà du niveau de la branche centrale (7) du revêtement de palier (6) en U et étant reliée ici à une structure (21) à soutenir par le palier (1).

2. Dispositif d'étanchéité selon la revendication 1, sur lequel les faces latérales du corps porteur (3) et les parties latérales (14, 15) du revêtement de palier (6) sont agencées à chaque fois sensiblement perpendiculairement à la surface de la voie de guidage (2).

3. Dispositif d'étanchéité selon la revendication 1 ou 2, sur lequel chaque évidement de moulage (16, 17) est formé par un profil de moulage (18, 19).

4. Dispositif d'étanchéité selon la revendication 3, sur lequel chaque profil de moulage (18, 19) et le corps porteur (3) sont fixés sur un corps de base de machine (5).

5. Dispositif d'étanchéité selon la revendication 3 ou 4, sur lequel l'évidement (16) réalisé par le profilé de moulage (18) sur le côté extérieur du corps porteur (3) est prolongé sur son côté opposé au corps porteur (3) sur l'extrémité libre de la branche (12) extérieure de la partie latérale (14) s'engageant dans l'évidement et est doté sur son extrémité d'une zone terminale (35) coudée en direction de la structure (21) à soutenir par le palier (1).

6. Dispositif d'étanchéité selon l'une quelconque des revendications 1 à 5, sur lequel le revêtement de palier (6) est conçu avec ses parties latérales (14, 15) comme un moule en tôle d'une seule pièce.

7. Dispositif d'étanchéité selon l'une quelconque des revendications 3 à 6, sur lequel chaque profil de moulage (18, 19) est réalisé comme un moule en tôle d'une seule pièce.

8. Dispositif d'étanchéité selon l'une quelconque des revendications 1 à 7, sur lequel le palier (1) est conçu comme un palier d'air.

9. Dispositif d'étanchéité selon l'une quelconque des revendications 3 à 8, sur lequel chaque profil de moulage (18, 19) présente sur son côté tourné vers le corps porteur (3) une branche latérale (24, 27) sensiblement parallèle à la surface latérale du corps porteur (3), laquelle branche est agencée en direction de la voie de guidage (2), mais se termine à une distance de son niveau de palier.

10. Dispositif d'étanchéité selon la revendication 9, sur lequel chaque profil de moulage (18, 19) s'appuie avec sa branche latérale (24, 27) sur une surface latérale attribuée du corps porteur (3).
